# EUROPEAN PATENT SPECIFICATION

(11) **EP 3 864 954 B1**
(45) Date of publication and mention of the grant of the patent: **20.03.2024**
(21) Application number: 21152543.1
(22) Date of filing: 20.01.2021
(51) Int. Cl.: A01F 29/00, A01F 29/01, A01G 3/00, B27L 7/00

(54) **HYDRAULIC CONTROL CIRCUIT FOR AN OPERATING MACHINE AND OPERATING MACHINE**
HYDRAULISCHER STEUERKREIS FÜR EINE ARBEITSMASCHINE UND ARBEITSMASCHINE
CIRCUIT DE COMMANDE HYDRAULIQUE POUR UNE MACHINE ET MACHINE

(30) Priority: 14.02.2020 IT 202000002977
(43) Date of publication of application: 18.08.2021
(73) Proprietor: Negri Srl, 46010 Marcaria (MN) (IT)
(72) Inventor: NEGRI, Marco, 46010 Marcaria (MN) (IT)
(74) Representative: Corradini, Corrado

(56) References cited:
- EP-A2- 0 119 659
- WO-A1-98/51932
- CN-A- 105 940 884
- DE-B- 1 096 667
- GB-A- 2 209 112

## Description

### TECHNICAL FIELD

The present invention relates to the sector of operating machines, such as agricultural machines for chopping or crushing material, preferably wooden material, into shavings or chips.

More particularly, the present invention relates to a hydraulic and/or hydraulic-electronic control circuit of said operating machine and to an operating machine equipped with such control circuit.

### PRIOR ART

They are known operating machines used to chop material, for instance used to chop wood so as to reduce the volume thereof or so as to make it usable as a fuel, for producing cellulose, chipboard panels or something else.

As known, said operating machines are equipped with a loading hopper adapted to house the material to be chopped, a cutting member adapted to process said material, and a conveying member arranged downstream of the loading hopper and immediately before the cutting member in order to drag the material to be chopped towards the cutting member.

The power for the entire operation is supplied, in said known operating machines, by a propulsion group generally consisting in an endothermic motor or an electric motor or in the mechanical or hydraulic power take off of another operating machine.

Such operating machines equipped with a conveying member feeding a cutting member are required to meet severe regulations and security standards, as the cutting member and the conveying member being in movement define a possible hazard for the operator. Therefore, it is perceived in the field the need to control in a precise and reliable way the operation of said operating machines increasing as much as possible the security standard in any operative configuration (for example also in working conditions which do not provide for the external electric energy supply).

An object of the present invention is to meet this and other needs, within a simple, rational, as well as extremely reliable and economically convenient solution.

Such object is achieved by the features of the invention indicated in the independent claims. The dependent claims outline preferred and/or particularly advantageous aspects of the invention.

### DISCLOSURE OF THE INVENTION

The invention, in particular, makes available a control circuit for an operating machine, wherein the operating machine is equipped with a cutting member motorised by a propulsion group and with a conveying member, wherein the control circuit comprises:
- a hydraulic pump actuated by the propulsion group (and, for instance, configured to draw a hydraulic fluid from a tank by a suction branch);
- a hydraulic motor configured to actuate the conveying member, wherein the hydraulic motor is arranged on a delivery branch of a hydraulic fluid slaved to the hydraulic pump;
- a first safety valve (for instance manually actuated) configured to selectively open and close a first by-pass branch branching from a first branching node arranged on the delivery branch upstream of the hydraulic motor (in the flowing direction of the hydraulic fluid imposed by the hydraulic pump when the first safety valve is in the first operative position) and flowing together into a first confluence node arranged on a return branch of the hydraulic fluid downstream of the hydraulic motor;
- a second safety valve configured to intercept a second by-pass branch branching from a second branching node arranged on the delivery branch upstream of the hydraulic motor and downstream of the first branching node and flowing together (for instance in a second confluence node arranged) in the return branch (or similarly directly in the tank or even in the suction branch), wherein the second safety valve can be selectively operated between two operative positions, one being a first operative position in which it closes the second by-pass branch and a second operative position in which it opens the second by-pass branch;
characterised in that the second safety valve is configured to pass from the first operative position to the second operative position automatically when at least one of the following conditions has occurred:
a) the first safety valve opens the first by-pass branch; and
b) the hydraulic pump is inactive.

Thanks to this solution, a control and safety circuit that is precise and reliable for an operating machine is made available.

In particular, a control circuit of the (for instance exclusively) hydraulic type, that is relatively easy to be handled and maintained, and cheap if compared to the known operative electromechanical systems, is made available.

Furthermore, a hydraulic control circuit is adapted to operate in a wide power range, making it possible to move the conveying member at low and high speeds.

According to an aspect of the invention, the control circuit can comprise a control group, which is configured to hydraulically control the second safety valve and keep it in the first operative position, when the first safety valve closes the first by-pass branch and the hydraulic pump is active.

Thereby, the control group allows the hydraulic fluid to inhibit the second safety valve from passing automatically from the first operative position to the second operative position during normal operation, however it allows the second safety valve to automatically pass from the first operative position to the second operative position when the first safety valve opens the first by-pass branch (with the active pump) and/or the hydraulic pump is inactive (regardless of the configuration of the first safety valve).

In particular, said control group makes available a simple and efficient method to remotely control the first operative position of the second safety valve based on the pressure of the hydraulic fluid downstream of the second branching node.

According to a further aspect of the invention, the control circuit may comprise a maximum valve, connected to the delivery branch downstream of the first branching node and upstream of the second safety valve, said maximum valve being configured to discharge a flow rate of exceeding hydraulic fluid when the pressure upstream of the maximum valve itself exceeds a threshold value (for instance intercepting an auxiliary duct flowing together into a third confluence node arranged on the return branch).

Thereby, the maximum valve ensures that the pressure of the hydraulic fluid in the control circuit (at the hydraulic motor) does not exceed a pre-set(maximum allowed) value, discharging the exceeding hydraulic fluid.

Said maximum valve, connected to the pressurized delivery branch, is thus adapted to protect the components forming the control circuit against pressure peaks which might damage them.

An aspect of the invention provides that the control circuit comprises a distributor group equipped with a distributor valve and configured to direct the hydraulic fluid to the hydraulic motor, so that it can be crossed by the hydraulic fluid selectively in a first crossing direction and in an opposite second crossing direction.

In such case, in fact, the hydraulic motor is of the bidirectional type, wherein for instance such hydraulic motor comprises a first door and a second door adapted to be crossed by the hydraulic fluid selectively in both running directions.

Thanks to this solution it is made available a distributor group which allows to reverse the circulation direction of the hydraulic fluid stream at the hydraulic motor, being thus possible to reverse the rotation motion imposed by it to the conveying member (and possibly interrupting the hydraulic fluid stream to be input into the hydraulic motor, being possible to stop it).

According to a further aspect of the invention, in addition, the distributor valve may be configured to be moved (manually) at least between an introduction position slaved to a first rotation direction of the hydraulic motor and an inversion position slaved to a second rotation direction of the hydraulic motor (and possibly a stop position).

It is thereby possible to vary, depending on the needs, the rotation direction of the hydraulic motor, therefore the direction of the hydraulic fluid stream inside thereof, and allow the movement of the conveying member in both directions (or stop it when required without de-activating the hydraulic pump or acting on the safety valves).

A further aspect of the invention provides that the control circuit may comprise a pressurizing element, for instance connected to the delivery branch, downstream of the second valve and upstream of the hydraulic motor, said pressurizing element being configured to ensure that the pressure of the hydraulic fluid in the control circuit feeding the electric motor is, in normal operation, not lower than a predetermined (minimum) pressure threshold value.

In practice, the pressurizing element is adapted to allow the passage of hydraulic fluid from or towards the hydraulic motor upon reaching the predetermined minimum pressure threshold value of the hydraulic fluid.

It is thereby possible to ensure that the hydraulic fluid in the control circuit reaches a minimum pressure such to inhibit the second safety valve from passing automatically from the first operative position to the second operative position during normal operation, however it allows the second safety valve to automatically pass from the first operative position to the second operative position when the first safety valve opens the first by-pass branch (with the active pump) and/or the hydraulic pump is inactive (regardless of the configuration of the first safety valve), namely when such minimum pressure is lacking. Thanks to the presence of said pressurizing element, therefore, it is possible to meet the operation requirements the control circuit is designed for.

According to an aspect of the invention, in addition, the control circuit may comprise:
- a solenoid valve, for instance connected to the delivery branch, downstream of the second safety valve and upstream of the hydraulic motor, configured to by-pass the hydraulic motor;
- a sensor configured to detect a parameter indicative of the operation of the propulsion group; and
- an electronic control unit operatively connected to the sensor and the solenoid valve.

For example, the electronic control unit may be configured to detect, through the sensor, a value of the parameter indicative of the operation of the propulsion group and selectively open and close the solenoid valve based on the value of the indicative parameter detected.

Thanks to this solution, the control circuit becomes not only hydraulic but also electro/hydraulic and an electronic/electro-mechanic component is made available that is adapted to protect the propulsion group from excessive stresses for instance generated by a high resistance offered by the material to the cutting member.

In fact it was observed that, in case the propulsion group is submitted to high stress, the speed of the propulsion group starts falling until it is possibly switched off. The solenoid valve controlled by the electronic control unit is adapted to act to avoid the aforesaid stall and in case the speed of the propulsion group falls below a given programmable minimum threshold, the control circuit stops (temporarily) the operation of the hydraulic motor and, therefore, the actuation of the conveying member, which, as it does no longer feed the cutting member, allows to reduce the load opposing resistance to the cutting member and, consequently, the propulsion group can increase again its revolutions.

According to a further aspect of the invention, in addition, the control circuit may comprise a compensated flow regulator (connected to the delivery branch, downstream of the second safety valve and upstream of the hydraulic motor), which is configured to partialise the flow rate of hydraulic fluid entering the hydraulic motor and, for example, discharge the flow rate of exceeding hydraulic fluid in the return branch (for instance at a fourth confluence node arranged thereon).

Thanks to the presence of the compensated flow regulator, it is possible to control the flow rate of the hydraulic fluid directed towards the hydraulic motor and thus adjust, manually (by the action of the operator), the speed of the conveying member connected to the hydraulic motor.

The compensated flow regulator, adapted to discharge the flow rate of the exceeding hydraulic fluid, further ensures to reduce stresses on the hydraulic circuit and, at the same time the power consumption can be reduced and adapted to the operation needs.

A further aspect of the invention makes available an operating machine used to chop material, which comprises:
- a cutting member motorised by a propulsion group;
- a conveying member, for instance arranged downstream of a loading hopper (where provided), configured to move the material in a transportation direction towards and/or away from the cutting member;
- a control circuit as above described, configured to control the operation of the conveying member.

Such solution allows to achieve the above described objects for an operating machine for chopping material.

### BRIEF DESCRIPTION OF THE DRAWINGS

Further features and advantages of the invention will be more apparent after reading the following description provided by way of non-limiting example, with the aid of the accompanying drawings.
Figure 1 is a schematic view of a control circuit according to the invention, wherein a first safety valve closes a first by-pass branch and a second safety valve is at a second operative position thereof and opens a second by-pass branch.
Figure 2 is a schematic view of the control circuit of figure 1, wherein the first safety valve closes the first by-pass branch, the second safety valve is in a first operative position thereof and closes the second by-pass branch, and a distributor valve is in an introduction position thereof.
Figure 3 is a schematic view of the control circuit of figure 2, wherein the first safety valve closes the first by-pass branch, the second safety valve is in its first operative position and closes the second by-pass branch, and the distributor valve is in an inversion position thereof.
Figure 4 is a schematic view of the control circuit of figure 2, wherein the first safety valve closes the first by-pass branch, the second safety valve is in its first operative position and closes the second by-pass branch, and the distributor valve is in a stop position thereof.
Figure 5 is a schematic view of the control circuit of figure 1, wherein the first safety valve opens the first by-pass branch.
Figure 6 is a schematic view of the control circuit of figure 2, wherein a solenoid valve and a compensated flow regulator are included.
Figure 7 is a schematic view summarizing the control circuit of figure 1.
Figure 8 is an axonometric view of an operating machine used to chop material according to the invention.

### BEST MODE OF THE INVENTION

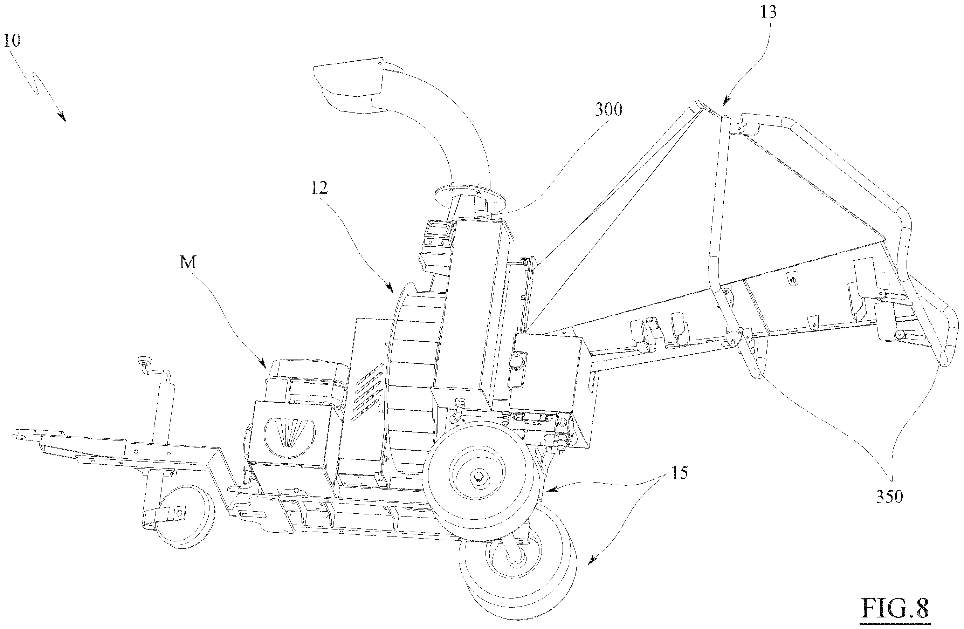

Referring in particular to such figures, an operating machine (shown only in figure 8) is globally indicated by 10, for instance a chipper machine or a chopping machine or the like, employed to chop material, for instance vegetable material, such as wooden material, small bushes and the like.

Said operating machine 10 comprises, in general, at least a cutting member 11, configured to comminute material.

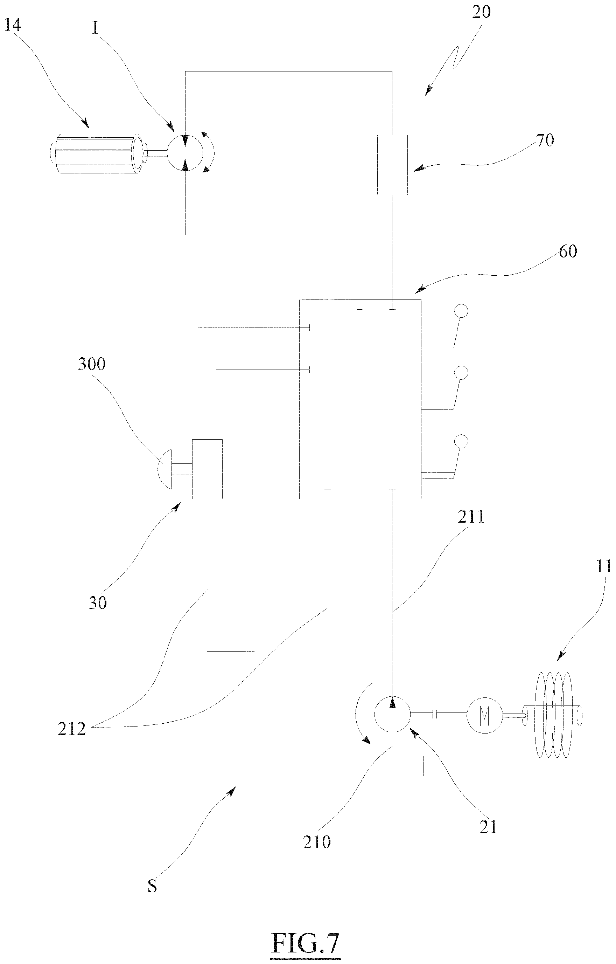

Such cutting member 11 is shown only schematically in figure 7.

The cutting member 11 is a member motorised by (and directly or indirectly connected to) a propulsion group M.

In particular, the propulsion group M comprises for instance a known-type motor, such as an endothermic motor or an electric motor or an external power source (for instance of a further operating and/or driving machine, such as a tractor) of the mechanical type or hydraulic type or other.

The cutting member 11 generally comprises at least a rotor provided with a plurality of knives or cutting members (which, for instance, protrude radially from a central portion of the rotor itself) configured to be actuated in rotation by the rotor (for example being rigidly engaged thereto) to cut/chop/comminute the material placed in contact with them.

The cutting member 11 is for example housed inside a protection crankcase 12 (see figure 8), and is rotatably associated thereto with respect to a rotation axis (coincident with a central axis of the rotor), for instance horizontal.

The cutting member 11 is for instance interposed between an inlet opening, into which the material enters the protection crankcase 12 to be cut/chopped/comminuted by the cutting member 11, and an outlet opening, from which the material cut/chopped/comminuted by the cutting member 11 exits the protection crankcase 12 (and is released by the operating machine 10).

For instance, the outlet opening is arranged radially with respect to the central axis of the rotor of the cutting member 11, preferably at a higher quota with respect to the cutting member 11 when the operating machine 10 is in use.

For example, the outlet opening may be defined by a discharge duct which extends along a longitudinal axis exiting from the protection crankcase 12 for example in a radial or tangential direction with respect to the central axis of the rotor.

The operating machine 10 may further comprise a loading hopper 13 (or any other static conveying system) adapted to receive the material to be cut/chopped/comminuted and direct it towards the cutting member 11, that is the inlet opening of the protection crankcase 12.

The (optional) loading hopper 13 is arranged above the protection crankcase 12 so as to flow together the material into the aforesaid inlet opening (which is preferably arranged above the cutting member 11 itself).

The operating machine 10 comprises, in particular, a dynamic, i.e. "motorised" conveying member 14, which is configured to move (drag) the material in a predefined transportation direction, for instance radial (or axial or tangential) with respect to the rotation axis of the cutting member 11.

For instance, the conveying member 14 is configured to transmit a movement to the material along the transportation direction, preferably into the two directions, i.e. an advancement direction, wherein the material is pushed towards the cutting member 11, and in a backward direction, wherein the material is pushed away from the cutting member 11.

For instance, the conveying member 14 comprises (or consists of) a revolution member, e.g. a roller, which has at least a revolution axis, for instance coincident with a roller central axis.

In practice, the conveying member 14 is configured to be actuated in rotation about the revolution axis in a direction or the other, respectively defining, the aforesaid advancement direction and the backward direction.

In alternative, the conveying member 14 may be defined by any type of conveyor, such as a belt conveyor (provided with a belt wrapped around a group of pulleys) or a roller band or other, as known to the skilled in the art.

For instance, the conveying member 14 is arranged downstream of the loading hopper 13 if provided, i.e. at or near its downstream end (i.e. its outlet mouth proximal to the inlet opening of the protection crankcase 12).

In particular, the conveying member 14, when actuated in the advancement direction, is adapted to push the material present in the loading hopper 13 towards (the inlet opening so as to be pushed against) the cutting member 11.

The operating machine 10 may be further provided with common ground stands, such as for example wheels 15 standing on the ground and/or possible pulling and hooking means configured to allow towing the operating machine 10 by means of a tractor, as shown in figure 8.

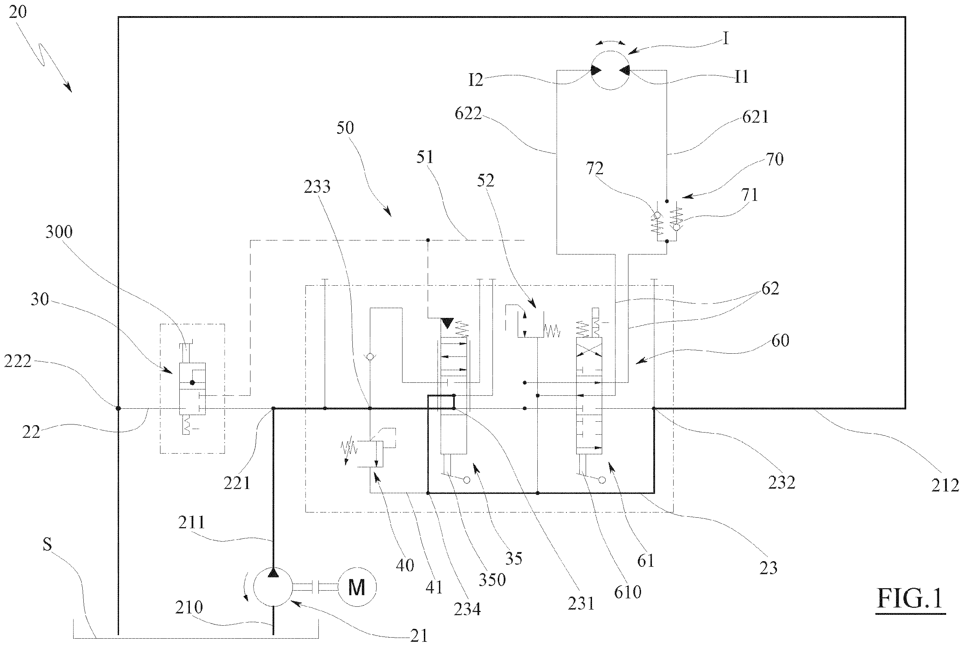

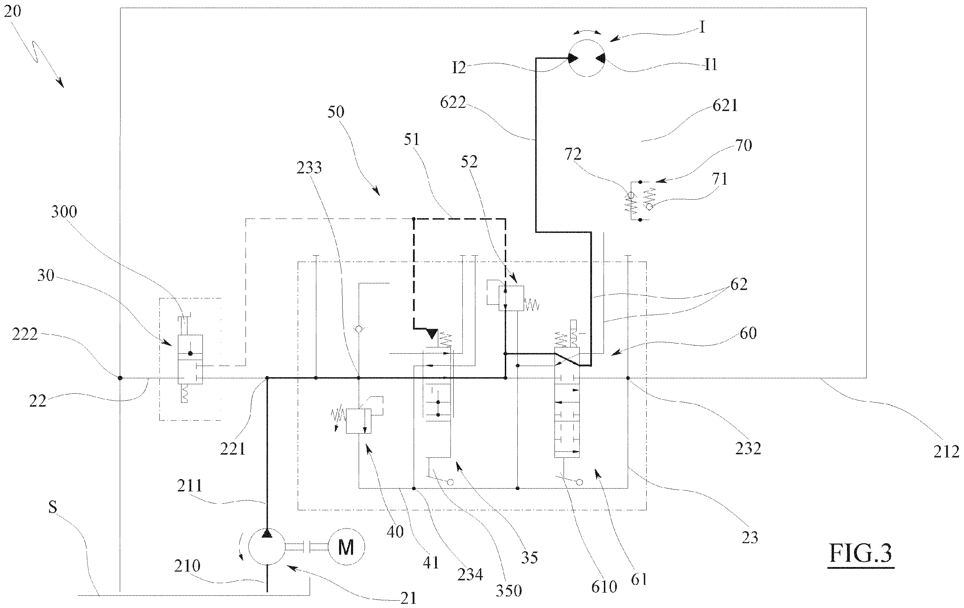

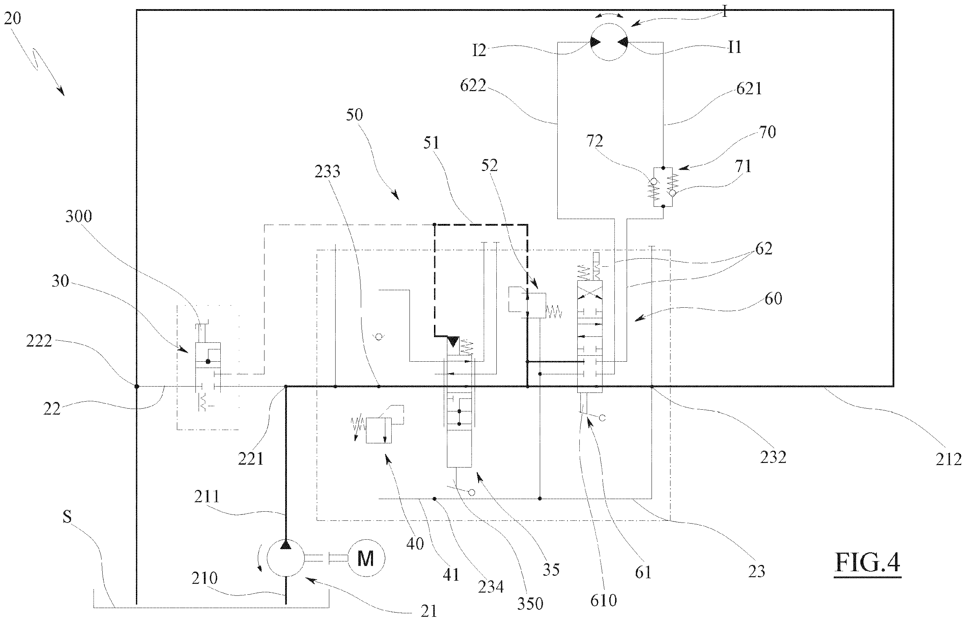

The operating machine 10 comprises, particularly, a control circuit 20 (shown in detail in figures 1-6) configured to allow and/or control the operation and/or de-activation in emergency /safety conditions of the conveying member 14.

The control circuit 20 mainly comprises a hydraulic pump 21 and at least a hydraulic motor I which is connected, as will be hereinafter better described, to the hydraulic pump 21 to be actuated by a pressurized hydraulic pump provided by the hydraulic pump 21 itself.

It must not be excluded that in additional not shown embodiments, the control circuit 20 can comprise a plurality of hydraulic motors I, for instance arranged in series between each other, and fed by the same pressurized hydraulic fluid provided by the hydraulic pump 21.

In particular, the hydraulic motor I may for instance be of the bidirectional type, for example with fixed displacement, and comprises a first door I1 and a second door I2.

When the hydraulic fluid crosses the hydraulic motor I in a first crossing direction, wherein it enters the first door I1 and exits from the second door I2, the hydraulic motor I is actuated so as to rotate the conveying member 14 in a first rotation direction (for instance in the aforesaid advancement direction), while when the hydraulic fluid crosses the hydraulic motor I in a second opposite direction, wherein it enters the second door I2 and exits from the first door 11, the hydraulic motor I is actuated so as to rotate the conveying member 14 in an opposite second rotation direction (for example in the aforesaid backward direction).

In the preferred embodiment, the hydraulic pump 21 is actuated by the propulsion group M (connected to the cutting member 11) and is configured to suck the hydraulic fluid from a tank S by means of a suction branch 210 (slaved to a suction door of the hydraulic pump 21).

As shown in figure 7, the hydraulic fluid sucked by the hydraulic pump 21 arrives at the hydraulic motor I in order to allow actuating the conveying member 14, and subsequently discharges it in the tank S.

The hydraulic pump 21, for instance of the fixed displacement one-way type, is connected to the hydraulic motor I by a delivery branch 211 (slaved to a delivery door of the hydraulic pump 21).

Said hydraulic motor I is then connected to the tank S (i.e. for discharge) by a return branch 212 of the hydraulic fluid (exiting from the hydraulic motor I itself).

In other words, the delivery branch 211 globally connects the hydraulic pump 21 to the hydraulic motor I and the return branch 212 globally connects the hydraulic motor I to the tank S.

The control circuit 20 further comprises a first by-pass branch 22 which:
- branches from a first branching node 221 intercepting the delivery branch 211 upstream of the hydraulic motor I in the flowing direction of the hydraulic fluid imposed by the hydraulic pump 21; and
- is adapted to flow together the hydraulic fluid to be discharged, i.e. into the tank S.

In the example shown, the first by-pass branch 22:
- flows together into a first confluence node 222 arranged on the return branch 212 downstream of the hydraulic motor I.

In practice, the first by-pass branch 22 is configured to by-pass - when required - the hydraulic motor I.

The control circuit 20 comprises, for this purpose, a first safety valve 30, which is for instance arranged on the first by-pass branch 22 and is configured to selectively open and close the first by-pass branch 22.

It must not be excluded that in further not shown embodiments, the control circuit 20 may comprise a plurality of first safety valves 30, for instance arranged (in series) on the same first by-pass branch 22 or arranged (in parallel) on respective first by-pass branches 22. In the preferred embodiment, the first safety valve 30 is manually actuated (for instance of the type actuatable by means of a pressure button 300) and is, for instance, a (three-valve) two position valve.

In a first position, for instance a stable position, the first safety valve 30 is configured to close the first by-pass branch 22 (as shown in figure 1-4, 6), thereby preventing the passage of hydraulic fluid through the first by-pass branch 22 from the delivery branch 211 to the return branch 212.

This position is the normal operative position (of operation of the conveying member 14) corresponding to the pressure button 300 lifted position (not pressed).

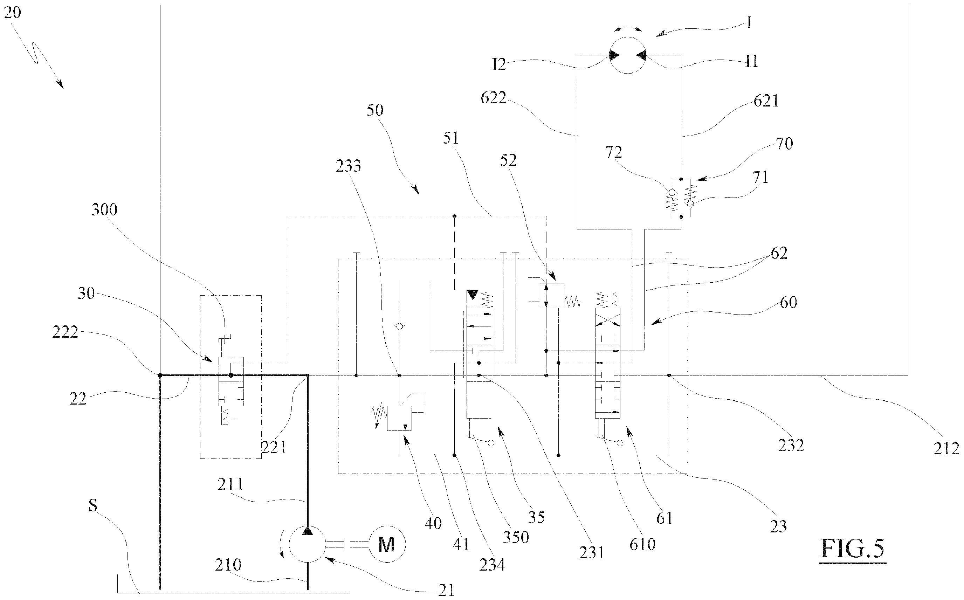

In a second position, for instance stable as well (obtained by manually taking the pressure button 300 in a lowered position thereof, i.e. pressed), the first safety valve 30 is configured to open the first by-pass branch 22 (as shown in figure 5), thereby allowing the passage of the hydraulic fluid through the first by-pass branch 22, i.e. by-passing the hydraulic motor I.

In this second position, the pressurized hydraulic fluid fed by the hydraulic pump 21 preferentially crosses the first by-pass branch 22 to be discharged into the tank S.

The control circuit 20 further comprises a second by-pass branch 23 which:
- branches from a second branching node 231 intercepting the delivery branch 211 upstream of the hydraulic motor I in the flowing direction of the hydraulic fluid imposed by the hydraulic pump 21 and downstream of the first branching node 221: and
- is adapted to flow together the hydraulic fluid to be discharged, i.e. into the tank S.

In the example shown, the second by-pass branch 23:
- flows together in a second confluence node 232 arranged on the return branch 212 downstream of the hydraulic motor I and upstream (or coincident- downstream) of the first confluence node 222.

In practice, the second by-pass branch 23 is configured to by-pass - when required - the hydraulic motor I.

The control circuit 20 comprises, for this purpose, a second safety valve 35, which is configured to selectively open and close (intercept) the second by-pass branch 23 and is, for instance, arranged on the second by-pass branch 23 and/or on the delivery branch 211.

In particular, the second safety valve 35 can be selectively operated between two operative positions, of which one first operative position, wherein it closes the second by-pass branch 23, and a second operative position, wherein it opens the second by-pass branch 23.

In the preferred embodiment, the second safety valve 35 is a semi-automatic manually actuated valve, as will be better described hereinafter, preferably of the type actuatable by a lever 350 (a handle) and is, for instance a valve with (four/six mouths and) two positions.

For instance, the lever 350 may comprise a pair of levers 350 linked between each other so as to allow that:
- (only) one of the two levers actuates the movement of the other lever enabling the second safety valve 35 to pass from the first operative position to the second operative position, and
- the two levers are independent and disengaged in the respective movement enabling the second safety valve 35 to pass from the second operative position to the first operative position.

The second safety valve 35 is for instance (mainly) manually actuatable, i.e. the manual actuation thereof is such to always control the positioning thereof in any one of the aforesaid operative positions.

Furthermore, the second safety valve 35 has an automatic and/or controlled actuation functionality (subordinate to the manual one).

Preferably, the automatic actuation is controlled by an elastic element, for instance a spring, configured to exert a predetermined elastic force (on the ports of the valve) such to bring the second safety valve 35 from the first operative position towards/to the second operative position.

For instance, such elastic force is configured to be manually prevailed.

Furthermore, the controlled actuation is hydraulically controlled (as will be better described hereinafter), for instance by means of a hydraulic piston, configured to exert a determined pushing force (on the ports of the valve) so as to push the second safety valve 35 contrasting the elastic force (i.e. from the second operative position towards/to the first operative position).

For instance, such pushing force (which ranges between a maximum value and a minimum value) is configured to be, in any case manually prevailed, but (at its maximum value) higher than the aforesaid elastic force (and at its minimum value is lower than the elastic force, for instance zero).

Furthermore, said second safety valve 35 may be of the proportional type, i.e. characterized by two distinct operative positions and endless intermediate positions having variable degrees of throttling the hydraulic fluid.

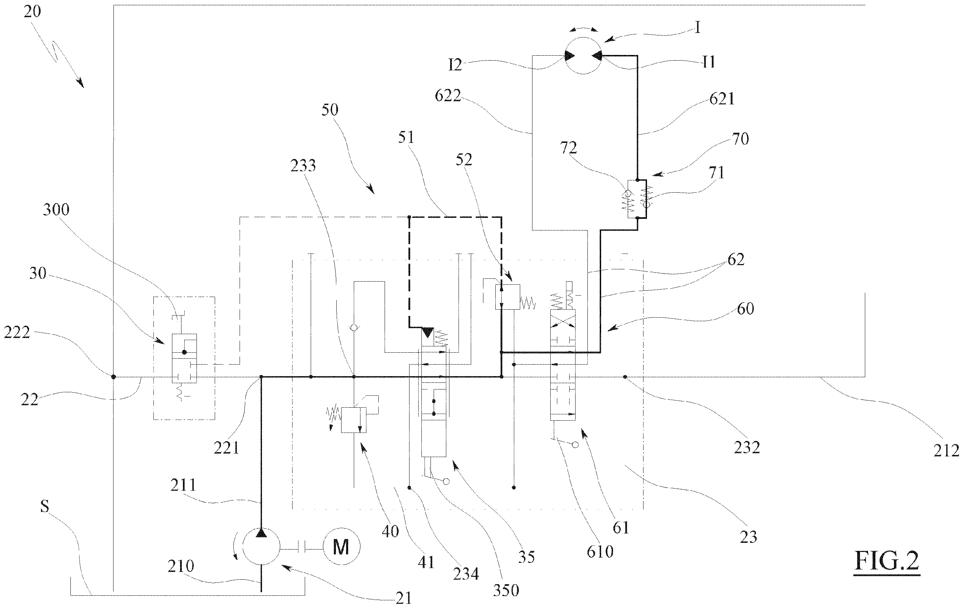

In the first operative position, such as an unstable position (if not controlled or manually controlled), the second safety valve 35 is configured to close the second by-pass branch 23 (as shown in figure 2-4, 6), thereby preventing the hydraulic fluid from passing through the second by-pass branch 23 from the delivery branch 211 to the return branch 212. This first operative position is the normal operative position (of the conveying member 14 operation) corresponding to the lever 350 lifted position (not pressed).

In the second operative position, such as stable (when not controlled or manually controlled) the second safety valve 35 is configured to open the second by-pass branch 23 (as shown in the figures 1 and 5), thereby enabling the hydraulic fluid to pass through the second by-pass branch 23 i.e. by-passing the hydraulic motor I.

In this second operative position, (if the first safety valve 30 is in its first position) the pressurized hydraulic fluid fed by the hydraulic pump 21 preferentially crosses the second by-pass branch 23 to be discharged into the tank S.

Thus, in this second operative position, no pressurized hydraulic fluid is provided to the hydraulic motor I.

The second safety valve 35 comprises for instance two ports, a first one of which configured to define a fitting between a downstream tract (of the second safety valve 35) of the delivery branch 211 with a downstream tract (of the second safety valve 35) of the same delivery branch 211 (when the second safety valve 35 is in its first operative position) and a second port between the (tract upstream of the) delivery branch 211 and the second by-pass branch 23 (when the second safety valve 35 is in its second operative position). For instance, the second port includes the second branching node 231.

Optionally, the control circuit 20 comprises, moreover, a maximum (pressure) valve 40 connected to the delivery branch 211 downstream of the first branching node 221 and connected to the discharge, for instance the return branch 212 (or -as shown - the second by-pass branch 23).

In particular, the maximum valve 40 is configured to intercept an auxiliary duct 41 branching from an overpressure node 233, arranged on the delivery branch 211 downstream of the first branching node 221 and upstream of the second branching node 231, and flowing together in a third confluence node 234 connected to the return branch 212, in particular arranged on the second by-pass branch 23 (downstream of the second branching node 231 and upstream of the second confluence node 232).

Said maximum valve 40 is an automatic valve (such as a spring valve) normally closed, with upstream pressurized inner control for opening, and (adjustable) spring closure.

In particular, the maximum valve 40 is configured to be opened if the pressure of the hydraulic fluid upstream of the maximum valve 40 itself, i.e. on the delivery branch 211, exceeds a predetermined maximum pressure threshold value (such to oppose the elastic force exerted by the pre-adjusted spring).

For example, such maximum threshold value may be of 160 bars.

In case the pressure of the hydraulic fluid on the delivery branch 211 is higher than such maximum threshold value, the maximum valve 40 is configured to be opened, discharging, through the auxiliary duct 41, in the return branch 212, a flow rate of hydraulic fluid sufficient to reduce the pressure keeping the hydraulic fluid pressure in the control circuit 20 (slaved to the hydraulic motor I) at lower values than such maximum threshold value. The control circuit 20 comprises, in addition, a control group 50, such as hydraulic, which is configured to hydraulically control the second safety valve 35, for instance by exerting the aforesaid pushing force.

The control group 50, i.e. the control circuit 20, comprises in particular a control branch 51, which for instance originates from the delivery branch 211, preferably from the downstream tract (of the second safety valve 35 and upstream of the hydraulic motor I).

The control branch 51 is, for instance, forked and has:
a first downstream end slaved to the hydraulic piston, configured to exert the determined pushing force (on the ports of the second safety valve 35) such to push the second safety valve 35 in contrast to the elastic force (i.e. from the second operative position towards/to the first operative position); and
a second downstream end connected to the first safety valve 30.

The first safety valve 30 is configured to selectively open and close the control branch 51 (i.e. the second downstream end thereof), depending on its position.

In particular, the first safety valve 30 is configured to close the control branch 51 (i.e. the second downstream end thereof) when it is in its first position (which also closes the first by-pass position 22) and to open the control branch 51 (i.e. the second downstream end thereof) putting it into communication with the tank S (i.e. through the first confluence node 222) when it is in its second position (which opens also the first by-pass branch 22). The control group 50 i.e. the control circuit 20, further comprises a control valve 52 arranged on the control branch 51, for instance upstream of the forking thereof, which is configured to determine a maximum allowed pressure of the hydraulic fluid in the control branch 51.

In practice, the control valve 52 is configured to ensure keeping the second safety valve 35 in its operative position, when the first safety valve 30 is arranged in its first position and the hydraulic pump 21 is active.

The control valve 52 is, for instance, a spring-actuated automatic valve, which is normally open and adjusted to be closed (isolating the delivery branch 211 from the control branch 51) when a programmable pressure threshold value is overcome, which is such to exert a maximum pushing force on the second safety valve 35 such to be (safely) manually prevailed.

For example, the programmable pressure threshold value is 40 bars.

The control pressure inside the control branch 51 thus has a maximum value of 40 bars. Whenever in the control branch 51 upstream or downstream of the control valve 52 the pressure of the hydraulic fluid falls below such programmable pressure threshold value, the control valve 52 returns in its opening position.

When the first safety valve 30 is in its first position (and closes the first by-pass branch 22) and the hydraulic pump 21 is active, as well as the second safety valve 35 has been manually brought to its first operative position, the hydraulic fluid flows in the delivery branch 211 at a pressure which, transmitted by the control branch 51 to the actuating hydraulic piston which controls the second safety valve 35, opposes to the automatic actuation elastic force of the second safety valve 35 which would tend to bring the second safety valve 35 back to its second operative position.

When, by contrast, the first safety valve 30 is in its second position (and opens the first by-pass branch 22) and/or the hydraulic pump 21 is inactive, as well as the second safety valve 35 is in its first operative position, the pressure in the control branch 51 (i.e. in the control group) falls dramatically (thereby reducing the pushing force exerted on the ports of the second safety valve 35 from the maximum value to the minimum value) and is no longer able to contrast the automatic actuation elastic force of the second safety valve 35, which elastic force can thus bring (automatically) the second safety valve 35 to its second operative position (of opening of the second by-pass branch 23).

The control circuit 20 optionally comprises a distributor group 60 preferably configured to direct the hydraulic fluid to the hydraulic motor I, so that it can be selectively crossed by the hydraulic fluid in the aforesaid first crossing direction and in the second crossing direction.

The distributor group 60 (i.e. the control circuit 20) comprises a distributor valve 61 arranged on the delivery branch 211, for example downstream of the second safety valve 35 and upstream of the hydraulic motor I.

Said distributor valve 61 is preferably configured to control the routing of the hydraulic fluid to the hydraulic motor I, so that it can be crossed by the hydraulic fluid selectively in the aforesaid first crossing direction and in the second crossing direction.

In particular, the distributor valve 61 can be selectively operated between at least an introduction position, wherein it directs the hydraulic fluid to enter the first door I1 of the hydraulic motor I (so that it can be crossed by the hydraulic fluid in the first crossing direction) and an inversion position, wherein it directs the hydraulic fluid to enter the second door I2 of the hydraulic motor I (so that it can be crossed by the hydraulic fluid in the second crossing direction).

In the preferred embodiment, the distributor valve 61 is manually (or semi-automatically) actuated, as will be better described hereinafter, preferably of the type actuatable by an actuation lever 610. For instance the distributor valve 61 may be a valve with at least (four/six mouths and) two positions (in the example three, to perform an accessory stop function of the hydraulic motor I).

The distributor valve 61 is for instance (mainly) manually actuatable, i.e. the manual actuation thereof is such to always control its positioning in any one of the aforesaid positions.

Furthermore, the distributor valve 61 has an automatic actuation function (subordinate to the manual one).

Preferably, the automatic actuation is controlled by an elastic element, for instance a spring, configured to exert a predetermined elastic force (on the ports of the valve) such to bring the distributor valve 61 from the inversion position to the introduction position. For instance, such elastic force is configured to be manually prevailed.

In practice, the distributor valve 61 is configured to pass automatically from the inversion position to the introduction position to release the manual force acting on the actuation lever 610.

In other words, the inversion position is an unstable balance position for the distributor valve 61 and/or the actuation lever 610 (rigidly connected to the ports of the distributor valve 61 itself).

By contrast, the introduction position is a stable balance position for the distributor valve 61 and/or the actuation lever 610.

The distributor group 60 further comprises a distributor duct 62, which is configured to connect the distributor valve 61 to the hydraulic motor I, thus defining a portion of the delivery branch 211 and/or of the return branch 212, as will be better described hereinafter.

The distributor duct 62 comprises (or consists of) one first duct 621, which is connected (to its distal end of the distributor valve 61) in the first mouth I1 of the hydraulic motor I, and one second duct 622, which is connected (to its distal end of the distributor valve 61) in the second mouth I2 of the hydraulic motor I.

In practice, the hydraulic motor I is arranged on the distribution duct 62 subdividing it into the aforesaid first duct 621 and second duct 622.

The first duct 621, when the hydraulic fluid is delivered from the distributor valve 61 to the hydraulic motor I such that the latter is crossed in the first crossing direction, defines a portion (terminal) of the delivery branch 211, while the second duct 622 (when the hydraulic fluid is delivered from the distributor valve 61 to the hydraulic motor I such that the latter is crossed in the first crossing direction), defines an (initial) portion of the return branch 212.

By contrast, the second duct 622, when the hydraulic fluid is delivered by the distributor valve 61 to the hydraulic motor I such that the latter is crossed in the second crossing direction, defines a (terminal) portion of the delivery branch 211, while the first duct 621 (when the hydraulic fluid is delivered by the distributor valve 61 to the hydraulic motor I such that the latter is crossed in the second crossing direction), defines an (initial) portion of the return branch 212.

The distributor valve 61, in detail, has a first port and a second port, which are selectively connected upstream with said downstream tract of the delivery branch 211 (interposed between the second safety valve 35 and the distributor valve 61) and downstream with the distributor duct 62, respectively defining the introduction position and the inversion position.

The first port, in particular, has:
- an outward passage putting in fluid communication the delivery branch 211 (i.e. the tract downstream thereof) with (the end of) the first duct 621; and
- a return passage putting in fluid communication the second duct 622 with the return branch 212, in the detail shown the return passage flows together (the hydraulic fluid) in the second by-pass branch 23.

The second port, by contrast, has:
- an outward passage putting in fluid communication the delivery branch 211 (i.e. the tract downstream thereof) with (the end of) the second duct 622; and
- a return passage putting in fluid communication the first duct 621 with the return branch 212, in the detail shown the return passage flows together (the hydraulic fluid) in the second by-pass branch 23.

Furthermore, the distributor valve 61 may be configured also to divert the hydraulic fluid (which would be directed to the hydraulic motor I) towards the discharge, i.e. discharging such hydraulic fluid into the return branch 212, by-passing as such the hydraulic motor I. In greater detail, the distributor valve 61 may be moved (manually, by the actuation lever 610) to a third position, called stop position.

In particular, the distributor valve 61 comprises a third port (corresponding to the aforesaid stop position).

The third port, in particular, has:
- an (only) direct passage putting in fluid communication the delivery branch 211 (i.e. the tract downstream thereof) with the return branch 212.

The third port, in detail, is adapted to temporarily close the distributor duct 62.

The control circuit 20, in particular, comprises a pressurizing element 70 configured to ensure that the pressure of the hydraulic fluid in the control circuit 20 feeding the hydraulic motor I is, in normal operation, not lower than a predetermined (minimum) pressure threshold value.

For example, the pressurizing element 70 is arranged on the delivery branch 211 and/or on the return branch 212, preferably on the distributor duct 62 (in the example on the first duct 621 thereof).

The pressurizing element 70 comprises (or consists of) a first automatic non-return valve 71 and an opposite second automatic non-return valve 72, wherein the first automatic non-return valve 71 is arranged parallel to the second automatic non-return valve 72 on the delivery branch 211, or
on the second distributor duct 62 (in the example on the first duct 621 thereof).

When the hydraulic fluid is pushed to feed the hydraulic motor I in its first rotation direction, the first automatic non-return valve 71 is configured so as to allow crossing it (i.e. opening the delivery branch 211, in detail the first duct 621) after reaching a pressure value of the hydraulic fluid upstream thereof that is not lower than a predetermined minimum pressure threshold value (positive), e.g. at least of 13 bars.

When the hydraulic fluid is pushed to feed the hydraulic motor I in its second rotation direction, the second automatic non-return valve 72 is configured so as to allow crossing it after reaching a pressure value of the hydraulic fluid upstream thereof that is not lower than the predetermined minimum pressure threshold value (positive), e.g. at least of 13 bars.

In other words, each automatic non-return valve 71,72 stays closed until a positive pressure of the hydraulic fluid (upstream thereof in the opposite sliding direction) is sufficient to open the automatic non-return valve and allows for the passage of the hydraulic fluid. The pressurizing element 70 is, in detail, configured to ensure that in the control branch 51 the hydraulic fluid is at least at a minimum pressure not lower than the aforesaid minimum pressure threshold value (positive), when the first safety valve 30 is in the first position and the second safety valve 35 is in its first operative position and the hydraulic pump 21 is active.

The control branch 51 can thereby exert its function of keeping the second safety valve 35 in its first operative position when it is not externally disturbed (i.e. when the first safety valve 30 is in the first position, the second safety valve 35 is in its operative position and the hydraulic pump 21 is active).

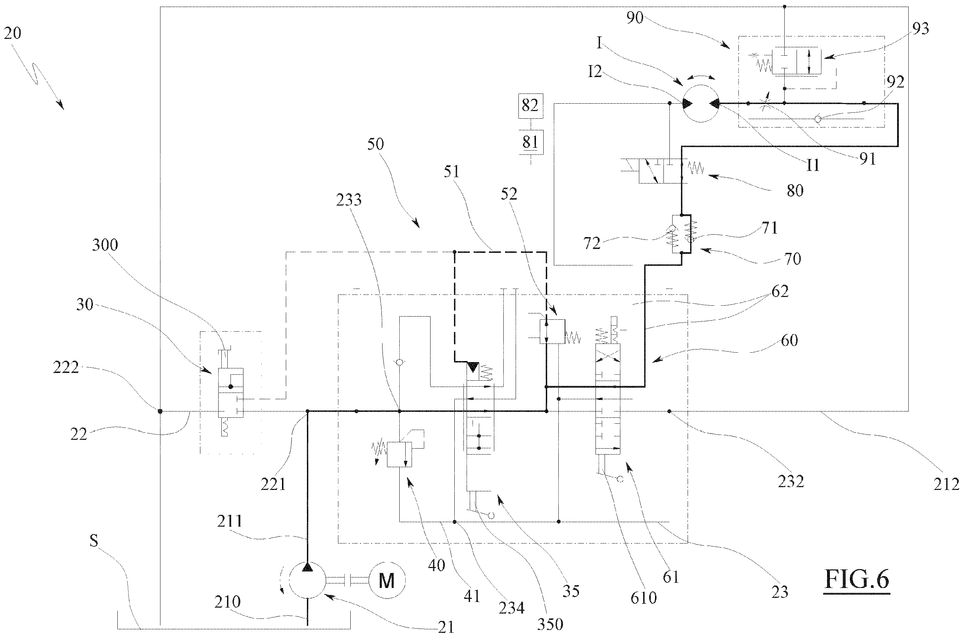

In an (optional) electro-hydraulic version of the control circuit 20, the control circuit 20 can comprise a solenoid valve 80 (see figure 6) configured to by-pass the hydraulic motor I depending on a parameter indicative of the operation of the propulsion group M .

For instance, the solenoid valve 80 is arranged on the delivery branch 211 and/or on the return branch 212, preferably on the distribution duct 62, in particular on the first duct 621 thereof.

The solenoid valve 80 is operatively movable (electrically controlled) between a first position, wherein it puts in communication the tract downstream of the delivery branch 211 with the first duct 621, and a second position wherein it puts in communication the tract downstream of the delivery branch 211 directly with the second duct 622 (by-passing the hydraulic motor I, for instance by a respective by-pass branch).

The solenoid valve 80 is for example a valve electrically actuated by a single coil solenoid and spring return.

Thereby, the control circuit 20 comprises a sensor 81 connected to the propulsion group M configured to detect a value of a parameter indicative of the operation of the propulsion group M .

The indicative parameter can be for instance selected from the group consisting of the drive torque, the power, the number of revolutions (or combinations thereof) of the propulsion group M.

Preferably, the indicative parameter that can be detected by the sensor 81 is the number of revolutions of the propulsion group M.

Again, the control circuit 20 comprises a control electronic unit 82, which is operatively connected to the sensor 81 and to the solenoid valve 80.

The control electronic unit 82 is configured to receive the value of the detected indicative parameter and control the solenoid valve actuation 80 based on (or depending on) the value of the detected indicative parameter.

For instance, the control electronic unit 82 is configured to:
- compare the value of the detected indicative parameter (e.g. the number of revolutions) and
- if such detected value falls below a predetermined cut-off value, command the solenoid valve 80 to bring it to its second position.

In such case, therefore, the conveying member (connected to the hydraulic motor I by-passed by the solenoid valve 80) interrupts the material being fed towards the cutting member 11 allowing therefore, the propulsion group to start again its normal operation (increase again the number of revolution).

If and when the detected value increases again above a predetermined cut-off value (greater or equal to the aforesaid cut-off value), the control electronic unit 82 is configured to command the de-activation of the solenoid valve 80 allowing it to return to its first position (automatically).

The aforesaid cut-off value may be a predetermined value, for instance obtained during calibration (by bench test) and stored in a suitable storage unit of the control electronic unit 82 from which it can be retrieved for the aforesaid comparison.

The control circuit 20 may optionally comprise a compensated flow regulator 90 configured to (manually) partialise the flow rate of the hydraulic fluid entering the hydraulic motor I.

For instance, the compensated flow regulator 90 is arranged on the delivery branch 211 and/or return branch 212, preferably on the distribution duct 62, in particular on the first duct 621 thereof (downstream of the solenoid valve 80, where provided).

Said compensated flow regulator 90 comprises a one-way adjustable throttle.

The one-way adjustable throttle comprises an adjustable throttle 91 (manually, for instance by a knob) and a check valve 92.

The adjustable throttle 91 intercepts the first duct 621 upstream of the hydraulic motor I and is configured to partialise the flow rate of hydraulic fluid entering the hydraulic motor I, by a shutter (actuated by the knob) adapted to modulate the opening of the adjustable throttle 91 itself.

The check valve 92 is arranged on a further duct parallel to the adjustable throttle 91 and is adapted to be crossed by the hydraulic fluid only in the direction from an inlet arranged downstream of the adjustable throttle 91 to an outlet arranged upstream of the adjustable throttle 91.

In particular, the adjustable throttle 91 and the check valve 92 form a loop closed path.

Furthermore, the compensated flow regulator 90 comprises a discharge valve 93, which is for example arranged on a third by-pass branch, which branches from the first duct 621 (upstream of the adjustable throttle 91 and downstream of the outlet of the further duct on which the check valve 92 is arranged) and flows together in the return branch 212 (for instance upstream of the first confluence node 222).

The discharge valve 93 of the compensated flow 90 is adapted to intercept the third by-pass branch to selectively open and close it, for instance depending on a pressure value of the hydraulic fluid upstream of the adjustable throttle 91.

In particular, the discharge valve 93 is configured to open the third by-pass branch, automatically, when the pressure of the hydraulic fluid upstream of the adjustable bottleneck 91 overcomes a predetermined (positive) cut-off value, against a pre-adjusted pushing elastic means.

In particular, said discharge valve 93 is for example a valve with two mouths and two positions, which opens by pressurized control upstream of the adjustable throttle 91 and closes by a spring and pressurized control downstream of the adjustable throttle 91. Said discharge valve 93 may further be of the proportional type, i.e. characterised by two distinct operative positions and endless intermediate positions with variable degrees of throttling of the stream of the hydraulic fluid.

When the pressure of the hydraulic fluid upstream of the adjustable throttle 91 is greater than the pressure of the hydraulic fluid downstream of the adjustable throttle 91 (possibly increased by the pressure exerted by the spring force), the discharge valve 93 is configured to open and discharge the flow rate of the exceeding hydraulic fluid in the return branch 212.

In the light of what above disclosed, the operation of the operating machine 10 and of the control circuit 20 the operating machine 10 is provided with, is the following.

The cutting member 11 is actuated by the propulsion group M, which propulsion group M allows activating the hydraulic pump 21 which, thus, allows the circulation of the hydraulic fluid in the control circuit 20.

Starting from any configuration of the hydraulic circuit 20 wherein the hydraulic pump 21 is inactive, upon activation of the latter the control branch 51 remains discharged and consequently the second safety valve 35 is forcedly in its second operative position, wherein it opens the second by-pass branch 23, by-passing as such the hydraulic motor I, which is thus still (and the conveying member 14 therewith), disengaged in rotation from the propulsion group M (actuated).

Such configuration allows the operating machine 10 to be highly safe, as the conveying member 14 will have to be actuated upon control of a fully aware operator (for instance different or at a different moment if compared to who actuated the propulsion group M). At this point, in order to rotate the conveying member 14 the operator is required to act on two distinct control members, in particular he must bring the first safety valve 30 (if it is not yet) to its first position (wherein it closes the first by-pass branch 22) and bring the second safety valve 35 to its first operative position (wherein it closes the second by-pass branch 23), allowing the hydraulic fluid to flow together towards the hydraulic motor I which thus actuates the conveying member 14.

While operating, in case of emergency, the operator will be able to act indiscriminately on the first safety valve 30 (acting on the pressure button 300), bringing it to its second position or on the second safety valve 35 (acting on any lever 350), bringing it to its second operative position.

In such case, in fact, one of the first by-pass branch 22 and the second by-pass branch 23 is opened and the hydraulic motor I is immediately by-passed, allowing to stop (immediately) the conveying member 14.

In case the first safety valve 30 is brought to its second position, in addition, the control branch 51 is arranged to discharge and consequently also the second safety valve 35 is automatically brought to its second operative position (under the elastic strength). Thereby, when the first safety valve 30 is brought back (voluntarily) to the first position, the conveying member 14 cannot be re-actuated, as the second safety valve 35 stays in its second operative position until, upon voluntary specific control (which differs from the one bringing back the first safety valve 30 to the first position), it is brought to its first operative position.

Furthermore, whenever the hydraulic pump 21 is de-activated, i.e. the propulsion group M does not actuate it, the control branch 51 is (automatically) arranged to discharge, and, therefore, the second safety valve 35 in forcedly pushed to its second operative position, wherein it opens the second by-pass branch 23, by-passing as such the hydraulic motor I, which is stopped (and the conveying member 14 therewith), disengaged in rotation from the propulsion group M (actuated).

As said, upon re-activation of the hydraulic pump 21 the second safety valve 35 stays in its second operative position until the operator acts thereon to voluntarily bring it to the first operative position.

In case it is desired to reduce the rotation speed of the conveying member 14 it is sufficient to act on the flow regulator 90, if provided.

The invention thus conceived is susceptible to several modifications and variations, all falling within the scope of the appended claims.

In practice, the materials used, as well as the contingent shapes and sizes, can be whatever according to the requirements without for this reason departing from the scope of protection of the following claims.

## Claims

1. A control circuit (20) for an operating machine, wherein the operating machine is equipped with a cutting member (11) motorised by a propulsion group (M) and with a conveying member (14), wherein the control circuit (20) comprises:
- a hydraulic pump (21) actuated by the propulsion group (M);
- a hydraulic motor (I) configured to actuate the conveying member (14), wherein the hydraulic motor (I) is arranged on a delivery branch (211) of a hydraulic fluid slaved to the hydraulic pump (21); **characterised in that** the control circuit further comprises:
- a first safety valve (30) configured to selectively open and close a first by-pass branch (22) branching from a first branching node (221) arranged on the delivery branch (211) upstream of the hydraulic motor (I) and flowing together with a first confluence node (222) arranged on a return branch (212) of the hydraulic fluid downstream of the hydraulic motor (I);
- a second safety valve (35) configured to intercept a second by-pass branch (23) branching from a second branching node (231) arranged on the delivery branch (211) upstream of the hydraulic motor (I) and downstream of the first branching node (221) and flowing together in the return branch (212), wherein the second safety valve (35) can be selectively operated between two operative positions, one being a first operative position in which it closes the second by-pass branch (23) and the other being a second operative position in which it opens the second by-pass branch (23);
whereby the second safety valve (35) is configured to pass from the first operative position to the second operative position automatically when at least one of the following conditions has occurred:
a) the first safety valve (30) opens the first by-pass branch (22); and
b) the hydraulic pump (21) is inactive.

2. The control circuit (20) according to claim 1, wherein the second safety valve (35) is of the slide valve type and comprises an elastic element configured to exert a predetermined elastic force on the ports of the second safety valve (35) such to bring the second safety valve (35) from the first operative position towards/to the second operative position.

3. The control circuit (20) according to claim 1 or 2, which comprises a control group (50), which is configured to hydraulically control the second safety valve (35) and keep it in the first operative position, when the first safety valve (30) closes the first by-pass branch (22) and the hydraulic pump (21) is active.

4. The control circuit (20) according to claim 3, wherein the control group is configured to exert a determined pushing force on the ports of the second safety valve (35) contrasting the predetermined elastic force, wherein the pushing force is higher than the elastic force.

5. The control circuit (20) according to any one of the preceding claims, wherein, with the second safety valve (35) arranged in its first operative position, when one of the following conditions occurs:
a) the first safety valve (30) is in its second position and opens the first by-pass branch (22) and/or
b) the hydraulic pump (21) is inactive,
the pressure in the control group (50) falls dramatically reducing the pushing force exerted by it to a value that is lower than the elastic force exerted by the elastic element on the same second safety valve (35), which elastic force automatically brings the second safety valve (35) in its second operative position of opening of the second by-pass branch (23).

6. The control circuit (20) according to claim 1, which comprises a maximum valve (40), connected to the delivery branch (211) downstream of the first branching node (221) and upstream of the second safety valve (35), said maximum valve (40) being configured to discharge a flow rate of excess hydraulic fluid when the pressure upstream of the maximum valve (40) itself exceeds a threshold value.

7. The control circuit (20) according to claim 1, which comprises a distributor group (60) equipped with a distributor valve (61) and configured to direct the hydraulic fluid to the hydraulic motor (I), so that it can be crossed by the hydraulic fluid selectively in a first crossing direction and in an opposite second crossing direction.

8. The control circuit (20) according to claim 1, wherein the hydraulic motor (I) is of the bidirectional type, said hydraulic motor (I) comprising a first door (11) and a second door (12) adapted for being crossed by the hydraulic fluid selectively in both directions.

9. The control circuit (20) according to claims 7 and 8, wherein the distributor valve (61) is configured to be moved at least between an introduction position slaved to a first direction of rotation of the hydraulic motor (I) and an inversion position slaved to a second direction of rotation of the hydraulic motor (I).

10. The control circuit (20) according to claim 1, which comprises a pressurizing element (70) configured to ensure that the pressure of the hydraulic fluid in the control circuit (20) that feeds the hydraulic motor (I) is not less than a predetermined minimum pressure threshold value.

11. The control circuit (20) according to claim 1, which comprises:
- a solenoid valve (80) configured to by-pass the hydraulic motor (I);
- a sensor (81) configured to detect a parameter indicative of the operation of the propulsion group (M); and
- an electronic control unit (82) operatively connected to the sensor (81) and to the solenoid valve (80),
wherein the electronic control unit (82) is configured to detect, through the sensor (81), a value of the parameter indicative of the operation of the propulsion group (M) and selectively open and close the solenoid valve (80) based on the value of the indicative parameter detected.

12. The control circuit (20) according to claim 1, which comprises a compensated flow regulator (90) configured to partialise the flow rate of hydraulic fluid entering the hydraulic motor (I) and discharge the flow rate of excess hydraulic fluid in the return branch (212).

13. An operating machine (10) used to chop material, which comprises:
- a cutting member (11) motorised by a propulsion group (M);
- a conveying member (14) configured to move the material in a transportation direction towards and/or away from the cutting member (11); and
- a control circuit (20) according to claim 1 configured to control the operation of the conveying member (14).

## Patentansprüche

1. Steuerschaltung (20) für eine Arbeitsmaschine, wobei die Arbeitsmaschine mit einem Schneidelement (11), das durch ein Antriebsaggregat (M) angetrieben wird, und mit einem Förderelement (14) ausgerüstet ist, wobei die Steuerschaltung (20) Folgendes umfasst:
- eine Hydraulikpumpe (21), die von dem Antriebsaggregat (M) betätigt wird;
- einen Hydraulikmotor (I), der konfiguriert ist, um das Förderelement (14) zu betätigen, wobei der Hydraulikmotor (I) an einem Zufuhrzweig (211) eines Hydraulikfluids angeordnet ist, der mit der Hydraulikpumpe (21) verbunden ist;
**dadurch gekennzeichnet, dass** die Steuerschaltung ferner Folgendes umfasst:
- ein erstes Sicherheitsventil (30), das konfiguriert ist, um selektiv einen ersten Bypass-Zweig (22) zu öffnen und zu schließen, der von einem ersten Verzweigungsknoten (221) abzweigt, der an dem Zufuhrzweig (211) stromaufwärts von dem Hydraulikmotor (I) angeordnet ist und mit einem ersten Zusammenflussknoten (222) zusammenfließt, der an einem Rückführungszweig (212) des Hydraulikfluids stromabwärts von dem Hydraulikmotor (I) angeordnet ist;
- ein zweites Sicherheitsventil (35), das konfiguriert ist, um einen zweiten Bypass-Zweig (23) zu unterbrechen, der von einem zweiten Verzweigungsknoten (231) abzweigt, der an dem Zuführungszweig (211) stromaufwärts von dem Hydraulikmotor (I) und stromabwärts von dem ersten Verzweigungsknoten (221) angeordnet ist und in dem Rückführungszweig (212) zusammenfließt, wobei das zweite Sicherheitsventil (35) selektiv zwischen zwei Betriebsstellungen betätigt werden kann, wobei eine eine erste Betriebsstellung ist, in der es den zweiten Bypass-Zweig (23) schließt, und die andere eine zweite Betriebsstellung ist, in der es den zweiten Bypass-Zweig (23) öffnet;
wobei das zweite Sicherheitsventil (35) konfiguriert ist, um automatisch von der ersten Betriebsstellung in die zweite Betriebsstellung überzugehen, wenn mindestens eine der folgenden Bedingungen eingetreten ist:
a) das erste Sicherheitsventil (30) öffnet den ersten Bypass-Zweig (22); und
b) die Hydraulikpumpe (21) ist nicht aktiv.

2. Steuerschaltung (20) nach Anspruch 1, wobei das zweite Sicherheitsventil (35) ein Schieberventil ist und ein elastisches Element umfasst, das konfiguriert ist, um eine vorbestimmte elastische Kraft auf die Öffnungen des zweiten Sicherheitsventils (35) ausübt, um das zweite Sicherheitsventil (35) aus der ersten Betriebsstellung in die zweite Betriebsstellung zu bringen.

3. Steuerschaltung (20) nach Anspruch 1 oder 2, die eine Steuergruppe (50) umfasst, die konfiguriert ist, um das zweite Sicherheitsventil (35) hydraulisch zu steuern und es in der ersten Betriebsstellung zu halten, wenn das erste Sicherheitsventil (30) den ersten Bypass-Zweig (22) schließt und die Hydraulikpumpe (21) aktiv ist.

4. Steuerschaltung (20) nach Anspruch 3, wobei die Steuergruppe konfiguriert ist, um eine bestimmte Druckkraft auf die Öffnungen des zweiten Sicherheitsventils (35) auszuüben, die der vorbestimmten elastischen Kraft entgegen steht, wobei die Druckkraft höher ist als die elastische Kraft.

5. Steuerschaltung (20) nach einem der vorherigen Ansprüche, wobei das zweite Sicherheitsventil (35) in seiner ersten Betriebsstellung angeordnet ist, wenn eine der folgenden Bedingungen eintritt:
a) das erste Sicherheitsventil (30) ist in seiner zweiten Stellung und öffnet den ersten Bypass-Zweig (22), und/oder
b) die Hydraulikpumpe (21) ist nicht aktiv,
der Druck in der Steuergruppe (50) fällt drastisch ab und reduziert die von ihr ausgeübte Druckkraft auf einen Wert, der geringer ist als die elastische Kraft, die von dem elastischen Element auf dasselbe zweite Sicherheitsventil (35) ausgeübt wird, wobei diese elastische Kraft das zweite Sicherheitsventil (35) automatisch in seine zweite Betriebsstellung eines Öffnens des zweiten Bypass-Zweigs (23) bringt.

6. Steuerschaltung (20) nach Anspruch 1, die ein Maximalventil (40) umfasst, das mit dem Zufuhrzweig (211) stromabwärts von dem ersten Verzweigungsknoten (221) und stromaufwärts von dem zweiten Sicherheitsventil (35) verbunden ist, wobei das Maximalventil (40) konfiguriert ist, um eine Durchflussmenge an überschüssigem Hydraulikfluid abzuleiten, wenn der Druck stromaufwärts von dem Maximalventil (40) an sich einen Schwellenwert überschreitet.

7. Steuerschaltung (20) nach Anspruch 1, die eine Verteilergruppe (60) umfasst, die mit einem Verteilerventil (61) ausgerüstet und konfiguriert ist, um die Hydraulikfluid zu dem Hydraulikmotor (I) zu leiten, sodass es selektiv in einer ersten Querrichtung und in einer entgegengesetzten zweiten Querrichtung von dem Hydraulikfluid durchquert werden kann.

8. Steuerschaltung (20) nach Anspruch 1, **dadurch gekennzeichnet, dass** der Hydraulikmotor (I) von dem bidirektionalen Typ ist, der Hydraulikmotor (I) umfassend eine erste Klappe (11) und eine zweite Klappe (12), die angepasst sind, um von dem Hydraulikfluid wahlweise in beiden Richtungen durchströmt zu werden.

9. Steuerschaltung (20) nach einem der Ansprüche 7 und 8, wobei das Verteilerventil (61) konfiguriert ist, um zumindest zwischen einer Einführungsposition, die von einer ersten Drehrichtung des Hydraulikmotors (I) abhängt, und einer Umkehrposition, die von einer zweiten Drehrichtung des Hydraulikmotors (I) abhängt, bewegt zu werden.

10. Steuerschaltung (20) nach Anspruch 1, die ein Druckbeaufschlagungselement (70) umfasst, das konfiguriert ist, um sicherzustellen, dass der Druck des Hydraulikfluids in der Steuerschaltung (20), der den Hydraulikmotor (I) speist, nicht unter einem vorbestimmten Mindestdruckschwellenwert ist.

11. Steuerschaltung (20) nach Anspruch 1, die Folgendes umfasst:
- ein Magnetventil (80), das konfiguriert ist, um den Hydraulikmotor (I) zu umgehen;
- einen Sensor (81), der konfiguriert ist, um einen Parameter zu erfasst, der indikativ für den Betrieb des Antriebsaggregats (M) ist; und
- eine elektronische Steuereinheit (82), die funktionsfähig mit dem Sensor (81) und dem Magnetventil (80) verbunden ist,
wobei die elektronische Steuereinheit (82) konfiguriert ist, um über den Sensor (81) einen Wert des Parameters zu erfassen, der indikativ für den Betrieb des Antriebsaggregats (M) ist, und das Magnetventil (80) basierend auf dem erfassten Wert des indikativen Parameters selektiv zu öffnen und zu schließen.

12. Steuerschaltung (20) nach Anspruch 1, die einen kompensierten Durchflussregler (90) umfasst, der konfiguriert ist, um die Durchflussmenge an Hydraulikfluid, das in den Hydraulikmotor (I) eintritt, aufzuteilen und die Durchflussmenge an überschüssigem Hydraulikfluid in die Rücklaufleitung (212) abzuleiten.

13. Arbeitsmaschine (10) zum Zerkleinern von Material, die Folgendes umfasst:
- ein Schneidelement (11), das von einem Antriebsaggregat (M) angetrieben wird;
- ein Förderelement (14), das konfiguriert ist, um das Material in einer Transportrichtung zu dem Schneidelement (11) hin und/oder davon weg zu bewegen; und
- eine Steuerschaltung (20) nach Anspruch 1, die konfiguriert ist, um den Betrieb des Förderelements (14) zu steuern.

## Revendications

1. Circuit de commande (20) pour machine d'exploitation, dans lequel la machine d'exploitation est équipée d'un élément de coupe (11) motorisé par un groupe de propulsion (M) et d'un élément de transport (14), dans lequel le circuit de commande (20) comprend :
- une pompe hydraulique (21) actionnée par le groupe de propulsion (M) ;
- un moteur hydraulique (21) configuré pour actionner l'élément de transport (14), dans lequel le moteur hydraulique (I) est disposé sur une branche de refoulement (211) d'un fluide hydraulique asservi à la pompe hydraulique (21) ; **caractérisé en ce que** le circuit de commande comprend en outre :
- une première soupape de sécurité (30) configurée pour ouvrir et fermer de manière sélective une première branche de dérivation (22) depuis un premier noeud de dérivation (221) disposé sur la branche de refoulement (211) en amont du moteur hydraulique (I) et circulant avec un premier noeud de confluence (222) disposé sur une branche de retour (212) du fluide hydraulique en aval du moteur hydraulique (I) ;
- une deuxième soupape de sécurité (35) configurée pour intercepter une deuxième branche de dérivation (23) depuis un deuxième noeud de dérivation (231) disposé sur la branche de refoulement (211) en amont du moteur hydraulique (I) et en aval du premier noeud de dérivation (221) et s'écoulant ensemble dans la branche de retour (212), dans laquelle la deuxième soupape de sécurité (35) pouvant être actionnée de manière sélective entre deux positions de fonctionnement, l'une étant une première position de fonctionnement dans laquelle elle ferme la deuxième branche de dérivation (23) et l'autre étant une deuxième position de fonctionnement dans laquelle elle ouvre la deuxième branche de dérivation (23) ;
dans lequel la deuxième soupape de sécurité (35) est configurée pour passer automatiquement de la première position de fonctionnement à la deuxième position de fonctionnement lorsqu'au moins l'une des conditions suivantes s'est produite :
a) la première soupape de sécurité (30) ouvre la première branche de dérivation (22) ; et
b) la pompe hydraulique (21) est inactive.

2. Circuit de commande (20) selon la revendication 1, dans lequel la deuxième soupape de sécurité (35) est du type à tiroir et comprend un élément élastique configuré pour exercer une force élastique prédéterminée sur les orifices de la deuxième soupape de sécurité (35) de manière à déplacer la deuxième soupape de sécurité (35) de la première position de fonctionnement vers/à la deuxième position de fonctionnement.

3. Circuit de commande (20) selon la revendication 1 ou 2, qui comprend un groupe de commande (50) configuré pour commander de manière hydraulique la deuxième soupape de sécurité (35) et la maintenir dans la première position de fonctionnement, lorsque la première soupape de sécurité (30) ferme la première branche de dérivation (22) et que la pompe hydraulique (21) est active.

4. Circuit de commande (20) selon la revendication 3, dans lequel le groupe de commande est configuré pour exercer une force de poussée déterminée sur les orifices de la deuxième soupape de sécurité (35) par opposition à la force élastique prédéterminée, la force de poussée étant supérieure à la force élastique.

5. Circuit de commande (20) selon l'une quelconque des revendications précédentes, dans lequel, la deuxième soupape de sécurité (35) est disposée dans sa première position de fonctionnement, lorsque l'une des conditions suivantes se produit :
a) la première soupape de sécurité (30) est dans sa deuxième position et ouvre la première branche de dérivation (22) et/ou
b) la pompe hydraulique (21) est inactive,
la pression dans le groupe de commande (50) chute drastiquement en réduisant la force de poussée exercée par celui-ci à une valeur inférieure à la force élastique exercée par l'élément élastique sur la même deuxième soupape de sécurité (35), laquelle force élastique amène automatiquement la deuxième soupape de sécurité (35) dans sa deuxième position de fonctionnement d'ouverture de la deuxième branche de dérivation (23).

6. Circuit de commande (20) selon la revendication 1, qui comprend une soupape maximale (40), connectée à la branche de refoulement (211) en aval du premier noeud de dérivation (221) et en amont de la deuxième soupape de sécurité (35), ladite soupape maximale (40) qui configurée pour évacuer un débit de fluide hydraulique excédentaire lorsque la pression en amont de la soupape maximale (40) dépasse elle-même une valeur seuil.

7. Circuit de commande (20) selon la revendication 1, qui comprend un groupe de distribution (60) équipé d'une soupape de distribution (61) et configuré pour diriger le fluide hydraulique vers le moteur hydraulique (I), de sorte qu'il puisse être traversé par le fluide hydraulique de manière sélective dans un premier sens de traversée et dans un deuxième sens de traversée opposé.

8. Circuit de commande (20) selon la revendication 1, dans lequel le moteur hydraulique (I) est du type bidirectionnel, ledit moteur hydraulique (I) comprenant une première porte (I1) et une deuxième porte (12) adaptées pour être traversées par le fluide hydraulique sélectivement dans les deux sens.

9. Circuit de commande (20) selon les revendications 7 et 8, dans lequel la soupape de distribution (61) est configurée pour être déplacée au moins entre une position d'introduction asservie à un premier sens de rotation du moteur hydraulique (I) et une position d'inversion asservie à un deuxième sens de rotation du moteur hydraulique (I).

10. Circuit de commande (20) selon la revendication 1, qui comprend un élément de pressurisation (70) configuré pour veiller à ce que la pression du fluide hydraulique dans le circuit de commande (20) qui alimente le moteur hydraulique (I) ne soit pas inférieure à une valeur seuil de pression minimale prédéterminée.

11. Circuit de commande (20) selon la revendication 1, comprenant :
- une électrovanne (80) configurée pour dériver le moteur hydraulique (I) ;
- un capteur (81) configuré pour détecter un paramètre indicatif du fonctionnement du groupe de propulsion (M) ; et
- une unité de commande électronique (82) connectée de façon opérationnelle au capteur (81) et à l'électrovanne,
dans lequel l'unité de commande électronique (82) est configurée pour détecter, par l'intermédiaire du capteur (81), une valeur du paramètre indiquant le fonctionnement du groupe de propulsion (M) et pour ouvrir et fermer de manière sélective l'électrovanne (80) sur la base de la valeur du paramètre indicatif détecté.

12. Circuit de commande (20) selon la revendication 1, qui comprend un régulateur de débit compensé (90) configuré pour fractionner le débit de fluide hydraulique entrant dans le moteur hydraulique (I) et évacuer le débit de fluide hydraulique excédentaire dans la branche de retour (212).

13. Machine d'exploitation (10) destinée au hachage des matériaux, comprenant :
- un élément de coupe (11) motorisé par un groupe de propulsion (M) ;
- un élément de transport (14) configuré pour déplacer le matériau dans une direction de transport et/ou loin de l'élément de coupe (11) ; et
- un circuit de commande (20) selon la revendication 1, configuré pour contrôler le fonctionnement de l'élément de transport (14).
